# FASCICULE DE BREVET EUROPEEN

(11) **EP 0 767 465 B1**
(45) Date de publication et mention de la délivrance du brevet: **21.04.1999**
(21) Numéro de dépôt: 96401897.2
(22) Date de dépôt: 05.09.1996
(51) Int. Cl.: G21C 19/46, C22B 3/00, G21F 9/30, C22B 60/04, C01G 56/00, B01F 1/00

(54) **Procédé et dispositif de dissolution d'un mélange d'oxydes d'uranium et de plutonium**
Verfahren und Vorrichtung zur Auflösung eines Oxidgemisches von Uran und Plutonium
Process and device for dissolving a mixture of oxides from uranium and plutonium

(30) Priorité: 06.09.1995 FR 9510428
(43) Date de publication de la demande: 09.04.1997
(73) Titulaire: COMPAGNIE GENERALE DES MATIERES NUCLEAIRES, F-78140 Velizy Villacoublay (FR); COMMISSARIAT A L'ENERGIE ATOMIQUE, 75752 Paris Cedex 15 (FR)
(72) Inventeur: Mouliney, Marie-Hélène, 38500 Voiron (FR); Bernard, Claude, 78410 Saint Remy les Chevreuse (FR)
(74) Mandataire: Le Roux, Martine

(56) Documents cités:
- EP-A- 0 023 585
- EP-A- 0 089 185
- EP-A- 0 158 555
- EP-A- 0 160 589
- WO-A-89/10981
- Article de M.-H. Mouliney et al.: 'Electrogenerated Ag II for Recovery of PuO2 from Waste' présenté à la conférence ENC '94 European Nuclear Conference, 2-6 octobre 1994, pages VII 1-4 cité par les demandeurs dans la description p. 2, l. 7-21.

## Description

La présente invention a pour objets un procédé et un dispositif pour la dissolution d'un mélange d'oxydes d'uranium et de plutonium ; plus précisément un procédé et un dispositif pour la dissolution d'une poudre consistant essentiellement en un mélange d'oxyde d'uranium UO₂, d'oxyde de plutonium PuO₂ et/ou d'oxydes mixtes (U, Pu)O₂.

Dans le présent texte et les revendications qui y sont annexées, on emploie le terme poudre pour désigner aussi bien de la poudre à l'état de poudre séche que de la poudre mise en suspension dans un liquide.

Les Demanderesses ont notamment été confrontées à la mise en oeuvre d'une telle "double" dissolution sur le site de La Hague.

Il est connu, d'une part, que l'oxyde d'uranium (UO₂) se dissout relativement facilement dans une solution d'acide nitrique (HNO₃) et d'autre part, que la dissolution de l'oxyde de plutonium (PuO₂) nécessite la mise en oeuvre d'autres procédés (ou d'autres moyens).

Parmi ces autres procédés, la dissolution électrolytique utilisant l'argent divalent en solution comme intermédiaire d'oxydation se révèle très efficace. On précise ci-après, quelque peu, ladite dissolution électrolytique. L'oxyde à dissoudre (PuO₂) est introduit dans une solution nitrique (HNO₃ : de normalité avantageusement maintenue entre 4 et 6N) contenant du nitrate d'argent monovalent. Cette solution traverse le compartiment anodique d'un électrolyseur. Lors de l'électrolyse, AgII est généré au voisinage de l'anode. Ledit AgII généré oxyde le plutonium de PuO₂ qui se dissout alors dans l'acide nitrique. Au voisinage de la cathode, des réactions de réduction se produisent (réduction notamment de NO₃⁻). La consommation d'acide nitrique qui en résulte doit être compensée par un apport d'acide nitrique en continu dans le compartiment cathodique (la normalité est maintenue, dans ledit compartiment, à une valeur supérieure ou égale à 8N, afin d'éviter tout dégagement d'hydrogène).

Une telle dissolution électrolytique ou dissolution oxydante de l'oxyde de plutonium (PuO₂) a été étudiée dans les années 80, notamment au Commissariat à l'Energie Atomique. Il a été préconisé de la mettre en oeuvre pour la récupération du plutonium contenu dans des déchets solides. Un tel procédé de récupération est notamment décrit dans la demande FR-A-2 562 314.

Les Demanderesses, après avoir étudié les problèmes techniques liés à la mise en oeuvre de la "double" dissolution : UO₂ - PuO₂ ont conçu une unité pour la dissolution en une seule étape de mélanges de poudres à base d'oxyde d'uranium, d'oxyde de plutonium et/ou d'oxydes mixtes uranium/plutonium. Ladite unité fonctionne en discontinu ; les conditions de dissolution étant fixées par les exigences liées au constituant le moins soluble, à savoir l'oxyde de plutonium.

Cette unité dite URP a notamment été présentée à Lyon (France) dans le cadre de l'ENC' 94 (European Nuclear Conference : 2-6 octobre 94). L'exposé de MM. M.-H Mouliney, F.-J Poncelet, P. Miquel, V. Decobert et M. Lecomte était référencé : "Electrogenerated AgII for Recovery of PuO₂ from Waste".

Ladite unité consiste principalement en un dissolveur qui comporte quatre compartiments, reliés entre eux (lesdits compartiments présentant évidemment une géométrie sous critique compatible avec des teneurs élevées en plutonium) :
- une chambre de réception des poudres connectée à un dispositif d'alimentation en lesdites poudres ;
- un compartiment de circulation muni d'un agitateur à turbine. Ladite turbine provoque la circulation de la solution dans le dissolveur. Elle génère suffisamment de turbulence pour disperser la poudre introduite et pour contrôler la couche de diffusion le long de la surface de l'anode de l'électrolyseur ;
- un compartiment supplémentaire qui permet d'ajuster le volume de l'installation ;
- une cellule d'électrolyse (ou électrolyseur) au sein de laquelle sont générés les ions AgII nécessaires à la dissolution du plutonium. Ladite cellule renferme une grille cylindrique en platine (anode) et un puits cathodique, séparés par un diaphragme poreux.

Comme précisé ci-dessus, un tel dissolveur fonctionne en discontinu. Il est rempli d'une solution nitrique contenant du nitrate d'argent monovalent. A partir dudit nitrate d'argent, la quantité d'ions AgII nécessaire à la dissolution du plutonium est générée par électrolyse. On introduit la charge de poudre à dissoudre dans ladite solution mise en circulation. Ladite solution circule globalement de la chambre de réception des poudres vers le compartiment de circulation, dudit compartiment de circulation vers la cellule d'électrolyse et de ladite cellule d'électrolyse à la fois vers ladite chambre de réception des poudres et vers le compartiment supplémentaire ; ledit compartiment supplémentaire communiquant avec le bas dudit compartiment de circulation. On prévoit des moyens pour refroidir la solution en circulation. Lorsque la dissolution est achevée, on soutire la solution qui renferme l'uranium et le plutonium dissous.

Au sein d'un tel dissolveur, le résultat souhaité - "double" dissolution de l'uranium et du plutonium - est obtenu, sans difficultés particulières, mais avec toutefois, une importante consommation d'argent (Ag), relativement à la quantité de plutonium dissoute. Par ailleurs, la capacité de traitement d'un tel dissolveur est relativement limitée.

Cette importante consommation d'argent est inhérente aux phénomènes physiques mis en jeu. En fait, la quantité d'argent consommée au cours du procédé n'est pas directement liée à la quantité de plutonium à dissoudre ; elle est proportionnelle au volume de la solution à traiter, à électrolyser. Or ledit volume dépend principalement de la quantité d'uranium à dissoudre compte tenu de la concentration maximale admissible... Dans de telles conditions, la quantité d'argent à introduire dépend largement de la quantité d'uranium à dissoudre alors que paradoxalement ledit argent n'est pas indispensable à la dissolution dudit uranium. Cette importante consommation d'argent est pénalisante vis-à-vis du coût de fonctionnement du dissolveur soit qu'elle implique une étape supplémentaire de récupération de l'argent permettant son recyclage, soit que ledit argent soit considéré comme un réactif consommable. Il en résulte également une consommation électrique importante.

Les Demanderesses ont alors reconsidéré le problème et mis au point la présente invention.

Celle-ci, sous ses deux aspects de procédé et de dispositif, constitue un perfectionnement à l'art antérieur tel que résumé ci-dessus.

Le procédé de l'invention constitue en effet un perfectionnement au procédé résumé ci-dessus ; perfectionnement tant vis-à-vis de la quantité d'argent nécessaire à la dissolution du plutonium que vis-à-vis de la capacité de traitement de l'installation. Les coûts de fonctionnement sont minimisés dans la mesure où l'on opère avec une consommation d'argent et d'électricité réduite.

Selon un autre de ses aspects, le procédé de l'invention permet de récupérer d'une part une solution dans laquelle est principalement dissous l'oxyde d'uranium et d'autre part une solution dans laquelle est quasi uniquement dissous l'oxyde de plutonium. Cette séparation uranium/plutonium peut, dans certains contextes, se révéler fort intéressante.

Le procédé de l'invention peut être mis en oeuvre dans un dissolveur du type de celui décrit ci-dessus (pour la mise en oeuvre du procédé de dissolution discontinue en une seule étape). Ledit dissolveur doit toutefois comporter des moyens complémentaires de filtration. Ceci est explicité ci-après.

On se propose maintenant de décrire ledit procédé de l'invention. Il vise à la dissolution d'une poudre, consistant essentiellement en un mélange d'oxydes d'uranium et de plutonium et/ou d'oxydes mixtes (U, Pu)O₂. Il met en oeuvre cette dissolution dans une solution d'acide nitrique, avec intervention d'argent divalent produit in situ par électrolyse. En cela, il est du type du procédé résumé ci-dessus.

De façon caractéristique, le procédé de l'invention conforme à l'objet de la revendication 1 comporte deux étapes, mises en oeuvre successivement au sein d'un même et unique dispositif, dans lequel circule, en boucle, une solution d'attaque. On précise ci-après lesdites deux étapes.

La première étape consiste à dissoudre en milieu nitrique seul, c'est-à-dire sans intervention d'argent II, les oxydes solubles dans l'acide nitrique, c'est-à-dire principalement l'oxyde d'uranium. Au cours de cette première étape, le dispositif est alimenté, en continu, d'une part, en la poudre à dissoudre et d'autre part, en acide nitrique tandis que l'on soutire, en continu, au travers d'un filtre, intégré dans ledit dispositif un certain débit de la solution en circulation ; ledit débit étant calculé de façon à maintenir dans ledit dispositif une concentration en uranium constante dans la solution. (Ladite solution renferme l'oxyde dissous).

L'homme du métier comprendra qu'en préambule de ladite première étape un certain équilibre doit être établi. On optimise ainsi la dissolution de l'uranium. Dans cet esprit d'optimisation, on vise à maintenir constante l'acidité libre de la solution en circulation.

En tout état de cause, au cours de ladite première étape, on dissout avantageusement tout l'oxyde d'uranium (ainsi qu'éventuellement, l'oxyde mixte soluble en milieu nitrique: (U, Pu)O₂). On soutire au travers du filtre un débit de la solution en circulation, solution contenant les oxydes dissous. Ledit filtre évite le passage, l'entraînement des particules non dissoutes, et notamment celui des particules d'oxyde de plutonium. On prévoit, si nécessaire, de décolmater ledit filtre, par tout moyen approprié. La solution soutirée peut être transférée vers une unité aval.

Au cours de la seconde étape, (que l'on qualifiera d'étape de dissolution de l'oxyde de plutonium), le résidu insoluble constitué principalement dudit oxyde de plutonium accumulé au cours de la première étape est dissous dans l'acide nitrique, grâce à l'intervention d'argent divalent obtenu in situ par électrolyse (après introduction d'une charge d'argent monovalent introduite au début de ladite seconde étape). Ladite électrolyse n'est mise en oeuvre qu'à l'issue de la première étape, après arrêt des alimentations en poudre et en acide et arrêt du soutirage. Elle n'est par ailleurs mise en oeuvre qu'après l'introduction dans la charge à électrolyser du réactif adéquat susceptible de générer de l'argent divalent, en une quantité suffisante. On met en oeuvre au cours de cette seconde étape du procédé de l'invention une dissolution électrolytique ou dissolution oxydante, classique. A l'issue de celle-ci, lorsque la dissolution de l'oxyde de plutonium est achevée, on transfère la solution vers une unité aval, par vidange complète de l'installation.

D'une manière générale, on constate que la mise en oeuvre de chacune des étapes ci-dessus ne soulève, en elle-même, pour l'homme du métier aucune difficulté particulière.

L'originalité du procédé de l'invention réside dans la mise en oeuvre desdites étapes (l'une en continu, l'autre en discontinu) successivement, dans un même dispositif incorporant un filtre ...

On précise ci-après des caractéristiques avantageuses de mise en oeuvre du procédé de l'invention.

Au cours de la première étape (dissolution de l'oxyde d'uranium avec alimentation et soutirage en continu) :
- la solution à filtrer (solution en circulation) lèche tangentiellement le filtre. Ceci est particulièrement avantageux, dans la mesure où on limite ainsi le colmatage dudit filtre;
- l'acidité de la solution mise en circulation est maintenue constante, avantageusement au voisinage de 6N. On optimise ainsi, comme déjà précisé ci-dessus, la dissolution de l'oxyde d'uranium ;
- la solution mise en circulation est chauffée, avantageusement pour maintenir sa température aux environs de 80°C. On optimise aussi, ainsi, la dissolution de l'oxyde d'uranium, en tout état de cause sa vitesse (la cinétique d'attaque).

A l'issue de ladite première étape et au début de la seconde :
- de l'argent monovalent, sous forme de nitrate d'argent, est ajouté, en quantité suffisante, à la solution mise en circulation. On n'exclut pas du cadre de l'invention, l'intervention d'argent monovalent sous une autre forme ...

Au cours de la seconde étape (dissolution discontinue de l'oxyde de plutonium) :
- l'acidité de la solution mise en circulation (dans cette étape, en circuit fermé) est maintenue entre 4 et 6N. Ce maintien est avantageux pour le résultat escompté (dissolution oxydante du PuO₂). En tout état de cause, pendant l'électrolyse, l'acidité de la solution en circulation a tendance à baisser. On détermine généralement l'installation et les conditions d'exploitation pour ce maintien de l'acidité entre 4 et 6 N, sans ajout d'acide;
- la solution mise en circulation est refroidie, avantageusement pour maintenir sa température aux environs de la température ambiante (∼ 25°C). Un tel refroidissement est opportun dans la mesure où l'électrolyse est exothermique.

Comme indiqué ci-dessus, le procédé de l'invention peut être mis en oeuvre dans un dissolveur du type de celui décrit lors de l'ENC' 94, auquel on a ajouté le système de filtration permettant de soutirer en continu de la solution pendant la première étape de l'opération.

Plus précisément, un dissolveur, utile à la mise en oeuvre du procédé de l'invention, qui constitue le second objet de ladite invention selon la revendication 8, comprend, reliés entre eux :
- un compartiment de circulation, muni d'un agitateur assurant le brassage et la circulation de la solution dans l'ensemble du dissolveur;
- un compartiment supplémentaire ;
- une cellule d'électrolyse destinée à la production d'argent divalent ;
et de façon caractéristique :
- des moyens pour filtrer en continu un débit de ladite solution mise en circulation; lesdits moyens étant associés à d'autres moyens pour le soutirage dudit débit.

Lesdits moyens pour filtrer sont avantageusement agencés dans le compartiment supplémentaire. Ils sont, comme on l'aura déjà compris à la lecture de ce qui précède, sollicités uniquement au cours de la première étape du procédé.

Bien entendu, au vu de la nature des matériaux mis en circulation (plus précisément de la présence de plutonium en quantité significative), tous les éléments du dissolveur - compartiment de circulation, compartiment supplémentaire, cellule d'électrolyse - présentent une géométrie sous critique.

Ledit dissolveur comporte également, selon une variante préférée, une chambre de réception des poudres à dissoudre. Celle-ci présente également une géométrie sous critique. Elle est avantageusement reliée d'une part au compartiment de circulation et d'autre part à la cellule d'électrolyse. Comme indiqué précédemment, une telle chambre de réception des poudres est alimentée en lesdites poudres, à l'état de poudre sèche, ou en lesdites poudres mises en supension dans un liquide. Une telle suspension est préparée à l'extérieur du dissolveur.

On notera que la présence d'une telle chambre n'est pas obligatoire. Il n'est nullement exclu de prévoir l'alimentation en poudre (poudres ou suspension de poudres) au niveau de l'un quelconque des trois éléments de base du dissolveur - le compartiment de circulation, le compartiment supplémentaire, la cellule d'électrolyse - ou au niveau d'une canalisation reliant deux desdits trois éléments.

Le dissolveur de l'invention, avec ou sans chambre de réception des poudres, est avantageusement équipé de moyens pour chauffer ou refroidir la solution d'acide nitrique mise en circulation. De tels moyens consistent avantageusement en une double enveloppe, pouvant être alimentée en fluide chauffant ou en fluide de refroidissement, agencée autour d'une canalisation du dissolveur.

Avantageusement, lorsque ledit dissolveur comporte une chambre de réception des poudres, une telle double enveloppe est agencée autour de la canalisation reliant ladite chambre au compartiment de circulation.

En tout état de cause, on peut retrouver, dans la structure du dissolveur de l'invention, les quatre compartiments du dissolveur de l'art antérieur. De façon originale, selon la variante préférée de l'invention, le compartiment supplémentaire est équipé de moyens pour filtrer et soutirer en continu un débit de la solution mise en circulation. De façon originale et particulièrement avantageuse, lesdits quatre compartiments sont agencés de sorte que : la solution s'écoule du haut du compartiment de circulation vers le haut du compartiment supplémentaire, puis du bas dudit compartiment supplémentaire vers le bas du compartiment anodique de l'électrolyseur, qui déborde (dans sa partie haute) vers la chambre de réception des poudres. A partir de ladite chambre, ladite solution retourne, à travers un échangeur de chaleur (pour céder ou recevoir des calories) vers l'aspiration de la turbine d'agitation située dans le compartiment de circulation.

Dans le cadre de cette variante avantageuse, la solution circule donc du haut vers le bas à l'intérieur du compartiment supplémentaire. La filtration y est alors mise en oeuvre avantageusement, par léchage tangentiel, au moyen d'un filtre disposé verticalement sur au moins une partie de la hauteur dudit compartiment.

Les procédé et dispositif de l'invention sont maintenant décrits en référence à l'unique figure annexée.

Sur ladite figure, on a représenté un dissolveur de l'invention (selon sa forme préférée) comportant :
- une chambre de réception des poudres 1 ;
- un compartiment de circulation 2, muni d'un agitateur à turbine 3, assurant le brassage et la circulation de la solution nitrique dans l'ensemble du dissolveur à débit réglable (ledit débit pouvant être réglé par action sur la vitesse de rotation de ladite turbine 3) ;
- un compartiment supplémentaire 4 dit compartiment de filtration et de soutirage muni d'un filtre 5 au travers duquel est soutiré, pendant la première étape du procédé, un débit de solution S, les particules non dissoutes étant retenues sur le filtre et/ou maintenues en suspension dans la solution de dissolution qui circule ;
- une cellule d'électrolyse 6 destinée à générer des ions AgII pour la dissolution de l'oxyde de plutonium lors de la seconde étape du procédé. Ladite cellule d'électrolyse 6 est constituée d'un puits cathodique 61 (renfermant la cathode 61') et d'un compartiment anodique 62 (renfermant l'anode 62') séparés par une cloison semi-perméable 60 qui assure le passage du courant (par migration des ions H⁺ essentiellement) tout en retenant les ions métalliques dans le compartiment anodique et les composés d'azote réduit dans le puits cathodique. Afin de compenser la consommation en acide nitrique dans ledit puits cathodique 61 pendant l'électrolyse, celui-ci est relié à une cuve tampon d'acide nitrique concentré (cuve non représentée) à partir de laquelle l'appoint est effectué.

On n'a pas représenté sur ladite figure les points de vidange avantageusement situés à un niveau bas, à partir desquels on peut vidanger ledit dissolveur (notamment à l'issue de la seconde étape).

Les échanges thermiques (chauffage pendant la dissolution nitrique, refroidissement pendant la dissolution électrolytique) sont assurés:
- par la double enveloppe 9 de la canalisation 8 (alimentée, en fluide chauffant pendant la dissolution nitrique, en fluide de refroidissement pendant la dissolution électrolytique),
- par recirculation dans le puits cathodique 61 à partir de la cuve tampon d'acide nitrique concentré (elle-même équipée d'un refroidisseur). On a schématisé une telle circulation par les deux flèches.

On décrit plus précisément ci-après, en référence à ladite figure, les deux étapes successives du procédé de l'invention.

### Lors de la première étape (dissolution de l'oxyde d'uranium en continu):

Le dissolveur est tout d'abord rempli d'une solution d'acide nitrique environ 9N puis la turbine est mise en route de façon à faire circuler ladite solution entre les différents éléments dudit dissolveur.

Ensuite, la poudre P (P∼ UO₂ + PuO₂ + éventuellement (U, Pu)O₂) est introduite en continu de façon dosée par une trémie 7 débouchant dans la chambre de réception des poudres 1. Ladite poudre tombe dans la solution et le mélange est aspiré dans la canalisation 8 vers la partie inférieure du compartiment 2 sous l'effet de l'agitateur 3. Le débit de soutirage dans le compartiment 4 est controlé pour maintenir une concentration constante en uranium de la solution. De l'acide nitrique A est introduit en continu à l'entrée du compartiment de circulation 2 pour compenser le soutirage (maintenir un volume constant de solution dans le dissolveur) et maintenir une acidité libre donnée de la solution.

Pendant cette étape de dissolution en continu, la double enveloppe 9 de la canalisation 8 est alimentée en fluide chauffant destiné à favoriser ladite dissolution.

La solution s'écoule du compartiment 2 vers le haut du compartiment de filtration 4 puis du bas de ce compartiment vers le bas du compartiment anodique 62 de l'électrolyseur 6 (hors tension) qui déborde vers la chambre de réception des poudres 1.

Le soutirage est effectué en continu à partir du compartiment 4 à travers le filtre 5 qui retient les particules non dissoutes (PuO₂ principalement).Ledit soutirage n'est "schématisé" sur la figure que par la lettre S.

Le mouvement de la solution dans ledit compartiment 4 permet de limiter le colmatage de la surface dudit filtre 5. Le décolmatage peut être effectué par tout moyen approprié.

### Lors de la seconde étape (dissolution de l'oxyde de plutonium en discontinu) :

Les alimentations de poudres P et d'acide A sont préalablement arrêtées.

Une charge d'AgNO₃ est introduite dans le compartiment de circulation 2 et l'électrolyseur 6 est mis sous tension.

La circulation de la solution de dissolution s'effectue comme lors de la première étape.

Les ions AgII sont générés en continu dans le compartiment anodique 62 de l'électrolyseur 6. Ils circulent ensuite dans l'installation où ils oxydent le plutonium du PuO₂, ce qui permet sa dissolution rapide dans l'acide nitrique.

Pendant cette étape de dissolution oxydante du PuO₂, la double enveloppe 9 de la canalisation 8 est alimentée en fluide de refroidissement destiné à évacuer les calories dégagées lors de l'électrolyse.

Au cours de cette étape, l'acidité de la solution de dissolution va baisser progressivement. L'installation et les conditions d'exploitation sont déterminées de façon à maintenir l'acidité de la solution de dissolution entre 4 et 6N pendant toute la seconde étape.

De même, l'acidité de la solution contenue dans le puits cathodique 61 diminue progressivement. Afin de maintenir cette acidité au-dessus de 8N, de l'acide nitrique concentré provenant de la cuve tampon mentionnée précédemment (et non représentée) est introduit dans ledit puits cathodique 61.

D'autre part, la circulation d'acide dans ledit puits cathodique 61 favorise l'évacuation des calories dégagées pendant l'électrolyse grâce à un échangeur de refroidissement installé dans la cuve de circulation.

L'atmosphère du dispositif est reliée à une unité de traitement de gaz de ventilation par un évent piqué au sommet de la chambre de réception des poudres 1.

Les gaz extraits 11 sont filtrés en amont de cet évent sur le filtre 10 afin de piéger les poudres éventuellement entraînées.

On illustre enfin l'invention par l'exemple ci-après.

Le procédé de dissolution est mis en oeuvre pour dissoudre une poudre P, comportant en mélange :
93 % en masse d'UO₂
6 % en masse d'(U, Pu) O₂ (oxyde mixte soluble en milieu nitrique)
1 % en masse de PuO₂ insoluble
(P = UO₂ + (U, Pu)O₂ + PuO₂).

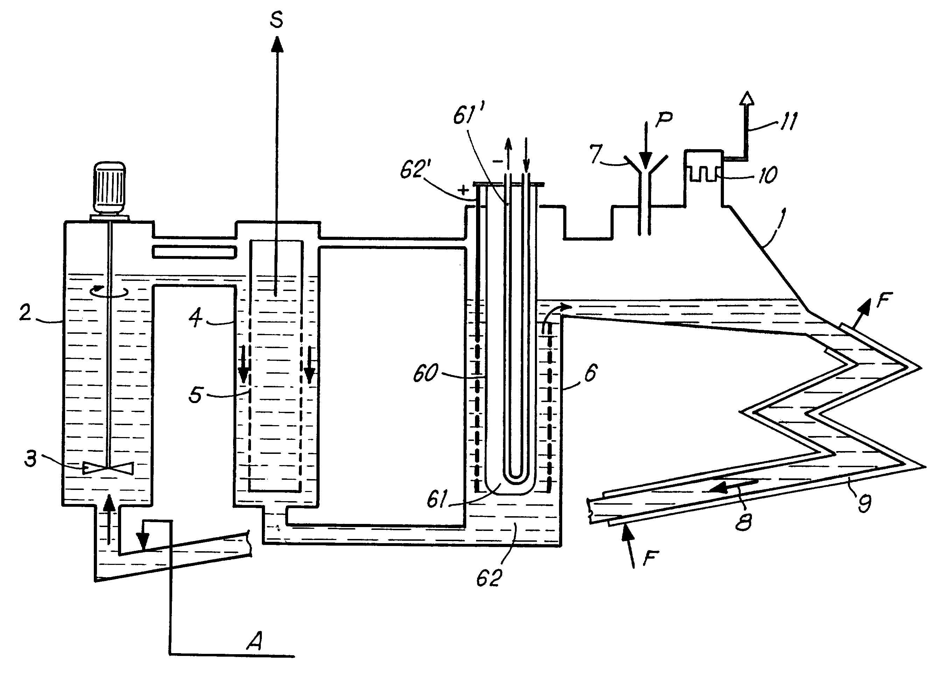

On introduit ladite poudre P à raison de 2,5 kg de métal/h (métal : U, Pu) dans un dissolveur de volume utile égal à 65 litres ; dissolveur tel que schématisé sur la figure 1.

Au sein dudit dissolveur a été préalablement mise en circulation une solution d'acide nitrique 9N, à une température de 80°C.

Au bout de 7 h de fonctionnement environ, l'équilibre est atteint (HNO₃ ∼ 6N ; concentration en métal de la solution mise en circulation : 250 g/l). On a dissous dans ladite solution UO₂ et (U, Pu)O₂.

L'acidité est maintenue constante par un apport A d'acide 9N, à raison de 10 l/h. Le soutirage S dans le compartiment 4 est effectué au même débit moyen.

Au bout de 130 heures environ, 3,25 kg de Pu insoluble se sont accumulés dans ledit dissolveur.

On arrête alors le chauffage, l'alimentation en poudre P et en acide A 9N, le soutirage S.

La deuxième étape du procédé de dissolution est alors effectuée dans les conditions suivantes :
- mise en route du refroidissement,
- introduction de nitrate d'argent dans le compartiment de circulation 2 pour obtenir une concentration d'argent de 0,05 mol/l dans la solution,
- mise en service de l'électrolyseur 6,
- le puits cathodique 61 initialement rempli d'acide 13,6 N est alimenté en boucle (à 400 l/h) à partir d'une cuve de 50 litres (remplie d'acide 13,6 N initialement) afin de maintenir l'acidité nitrique dans ledit puits cathodique 61 au-dessus de 8N et afin d'évacuer les calories dégagées par l'électrolyse.

La dissolution complète est obtenue au bout de 5 heures environ. Ladite dissolution électrolytique (de la même quantité de Pu) mise en oeuvre selon le procédé de l'art antérieur (traitement de la charge en une seule étape) aurait consommé environ 20 fois plus d'argent.

Par ailleurs, le procédé de l'invention a environ une capacité de traitement 1,5 fois supérieure à celle du procédé de l'art antérieur.

## Revendications

1. Procédé de dissolution, d'une poudre (P) consistant essentiellement en un mélange d'oxydes d'uranium, de plutonium et/ou d'oxydes mixtes d'uranium et de plutonium dans une solution d'acide nitrique, avec intervention d'argent divalent produit in situ par electrolyse, caractérisé en ce qu'il comporte deux étapes, mises en oeuvre successivement au sein d'un même dispositif, dans lequel est mise en circulation, en boucle, une solution d'attaque :
- une première étape, tout au long de laquelle ledit dispositif est alimenté en continu, d'une part, en ladite poudre (P) et d'autre part, en acide nitrique (A), tandis que l'on soutire, en continu, au travers d'un filtre (5), intégré dans ledit dispositif, un débit de solution (S) dans laquelle est principalement dissous ledit oxyde d'uranium; ledit débit étant calculé de façon à maintenir en circulation dans ledit dispositif une concentration constante d'uranium dans la solution ;
- une seconde étape, après arrêts desdites alimentations en poudre (P) et en acide (A) et du soutirage, au cours de laquelle on dissout l'oxyde de plutonium accumulé dans ledit dispositif tout au long de ladite première étape, en faisant intervenir de l'argent divalent généré in situ par électrolyse; seconde étape, à l'issue de laquelle on récupère une solution dans laquelle est dissous ledit oxyde de plutonium.

2. Procédé selon la revendication 1, caractérisé en ce qu'au cours de ladite première étape, la solution à filtrer lèche tangentiellement ledit filtre (5).

3. Procédé selon l'une des revendications 1 ou 2, caractérisé en ce qu'au cours de ladite première étape, l'acidité de la solution mise en circulation est maintenue constante, avantageusement au voisinage de 6N.

4. Procédé selon l'une quelconque des revendications 1 à 3, caractérisé en ce qu'au cours de ladite première étape, on chauffe ladite solution mise en circulation; avantageusement pour maintenir sa température aux environs de 80°C.

5. Procédé selon l'une quelconque des revendications 1 à 4, caractérisé en ce qu'au début de ladite seconde étape, de l'argent monovalent, sous forme de nitrate d'argent, est ajouté, en quantité suffisante, à ladite solution mise en circulation.

6. Procédé selon l'une quelconque des revendications 1 à 5, caractérisé en ce qu'au cours de ladite seconde étape, l'acidité de la solution mise en circulation est maintenue entre 4 et 6N.

7. Procédé selon l'une quelconque des revendications 1 à 6, caractérisé en ce qu'au cours de ladite seconde étape, on refroidit ladite solution mise en circulation, avantageusement pour maintenir sa température aux environs de 25°C.

8. Dispositif de dissolution, d'une poudre (P) consistant essentiellement en un mélange d'oxydes d'uranium, de plutonium et/ou d'oxydes mixtes d'uranium et de plutonium, dans une solution d'acide nitrique, avec intervention d'argent divalent produit in situ par électrolyse; ledit dispositif comportant , reliés entre eux :
- un compartiment de circulation (2), muni d'un agitateur (3) assurant le brassage et la circulation de la solution dans l'ensemble dudit dispositif;
- un compartiment supplémentaire (4),
- une cellule d'électrolyse (6) destinée à la production d'argent divalent,
lesdits compartiments (2, 4) et cellule (6) présentant une géométrie sous critique; ledit dispositif étant caractérisé en ce qu'il comporte en outre, avantageusement dans ledit compartiment supplémentaire (4), des moyens (5) pour filtrer en continu un débit de ladite solution (S) mise en circulation; lesdits moyens (5) étant associés à des moyens pour soutirer ledit débit de solution filtrée (S).

9. Dispositif selon la revendication 8, caractérisé en ce qu'il comporte en outre une chambre de réception (1) des poudres (P) reliée d'une part audit compartiment de circulation (2) et d'autre part à ladite cellule d'électrolyse (6) ; ladite chambre de réception (1) des poudres (P) présentant une géométrie sous critique.

10. Dispositif selon la revendication 9, caractérisé en ce que la canalisation (8) reliant ladite chambre de réception (1) des poudres (P) et ledit compartiment de circulation (2) est équipée d'une double enveloppe (9), pouvant être alimentée en fluide (F) chauffant ou en fluide (F) de refroidissement.

11. Dispositif selon l'une des revendications 9 ou 10 caractérisé en ce que lesdits compartiments de circulation (2) et supplémentaire (4), la cellule d'électrolyse (6) et la chambre de réception (1) des poudres (P) sont reliés entre eux de sorte que la solution s'écoule du haut dudit compartiment de circulation (2) vers le haut dudit compartiment supplémentaire (4), puis du bas de ce compartiment supplémentaire (4) vers le bas du compartiment anodique (62) de la cellule d'électrolyse (6) qui déborde vers la chambre de réception (1) des poudres (P); ledit compartiment supplémentaire (4) étant équipé d'un filtre (5) sur au moins une partie de sa hauteur.

## Patentansprüche

1. Verfahren zur Auflösung eines Pulvers (P), das im wesentlichen aus einem Gemisch von Oxiden von Uran und Plutonium und/oder Uran/Plutonium-Mischoxiden besteht, in einer Salpetersäurelösung in Gegenwart von divalentem Silber, das durch Elektrolyse in situ gebildet wird, dadurch gekennzeichnet, daß es zwei Stufen umfaßt, die aufeinanderfolgend in der gleichen Vorrichtung durchgeführt werden, in der eine Aufschlußlösung im Kreislauf zirkulieren gelassen wird, bei dem:
- in einer ersten Stufe in die genannte Vorrichtung einerseits das genannte Pulver (P) und andererseits die Salpetersäure (A) kontinuierlich eingeführt werden, während durch einen Filter (5), der in die genannte Vorrichtung integriert ist, eine Durchsatzmenge einer Lösung (S), in der hauptsächlich das genannte Uranoxid gelöst ist, kontinuierlich abgezogen wird, wobei die genannte Durchsatzmenge so berechnet wird, daß in der genannten Vorrichtung die Zirkulation einer konstanten Uran-Konzentration in der Lösung aufrechterhalten wird; und
- in einer zweiten Stufe nach Beendigung der genannten Einführungen von Pulver (P) und von Säure (A) und nach Beendigung des Abziehens, in deren Verlauf das Plutoniumoxid, das sich in der genannten Vorrichtung während der genannten ersten Stufe angereichert hat, in Gegenwart von divalentem Silber, das durch Elektrolyse in situ gebildet wird, gelöst wird. wobei man am Ende der zweiten Stufe eine Lösung gewinnt, in der das genannte Plutoniumoxid gelöst ist.

2. Verfahren nach Anspruch 1, dadurch gekennzeichnet, daß die zu filtrierende Lösung während des Ablaufs der genannten ersten Stufe tangential an dem genannten Filter (5) entlangstreicht.

3. Verfahren nach Anspruch 1 oder 2, dadurch gekennzeichnet, daß im Verlauf der genannten ersten Stufe die Acidität der im Kreislauf geführten Lösung konstant gehalten wird, vorzugsweise bei etwa 6 N.

4. Verfahren nach einem der Ansprüche 1 bis 3, dadurch gekennzeichnet, daß im Verlauf der genannten ersten Stufe die im Kreislauf geführte Lösung erwärmt wird, vorzugsweise um ihre Temperatur bei etwa 80°C zu halten.

5. Verfahren nach einem der Ansprüche 1 bis 4, dadurch gekennzeichnet, daß zu Beginn der genannten zweiten Stufe das monovalente Silber in Form von Silbernitrat in ausreichender Menge zu der im Kreislauf geführten Lösung zugegeben wird.

6. Verfahren nach einem der Ansprüche 1 bis 5, dadurch gekennzeichnet, daß im Verlauf der genannten zweiten Stufe die Acidität der im Kreislauf geführten Lösung zwischen 4 N und 6 N gehalten wird.

7. Verfahren nach einem der Ansprüche 1 bis 6, dadurch gekennzeichnet, daß im Verlauf der genannten zweiten Stufen die im Kreislauf geführte Lösung gekühlt wird, vorzugsweise um ihre Temperatur bei etwa 25°C zu halten.

8. Vorrichtung zur Auflösung eines Pulvers (P), das im wesentlichen aus einem Gemisch von Oxiden von Uran und Plutonium und/oder Uran/Plutonium-Mischoxiden besteht, in einer Salpetersäurelösung in Gegenwart von divalentem Silber, das durch Elektrolyse in situ gebildet wird, wobei die genannte Vorrichtung die folgenden miteinander verbundenen Einrichtungen aufweist:
- ein Zirkulationsabteil (2), das mit einem Rührer (3) ausgestattet ist, der das Umrühren und die Zirkulation der Lösung in der Gesamtheit der genannten Vorrichtung gewährleistet;
- ein Zusatz-Abteil (4),
- eine Elektrolysezelle (6) für die Bildung von divalentem Silber, wobei die genannten Abteile (2,4) und die Zelle (6) eine unterkritische Geometrie aufweisen, dadurch gekennzeichnet ist, daß die genannte Vorrichtung außerdem umfaßt,
vorzugsweise in dem genannten Zusatz-Abteil (4), Einrichtungen (5) zum kontinuierlichen Filtrieren der Durchsatzmenge der im Kreislauf geführten genannten Lösung (S), wobei die genannten Einrichtungen (5) mit Einrichtungen zum Abziehen des genannten Durchsatzmenge der filtrierten Lösung (S) assoziiert sind.

9. Vorrichtung nach Anspruch 8, dadurch gekennzeichnet, daß sie außerdem eine Aufnahmekammer (1) für Pulver (P) aufweist, die einerseits mit dem genannten Zirkulationsabteil (2) und andererseits mit der genannten Elektrolysezelle (6) verbunden ist, wobei die genannte Aufnahmekammer (1) für Pulver (P) eine unterkritische Geometrie aufweist.

10. Vorrichtung nach Anspruch 9, dadurch gekennzeichnet, daß die Kanalisation (Rohrleitung) (8), welche die genannte Aufnahmekammer (1) für Pulver (P) und das genannte Zirkulationsabteil (2) miteinander verbindet, mit einer Doppelwand (9) ausgestattet ist, durch welche ein Heizfluid (F) oder ein Kühlfluid (F) zugeführt werden kann.

11. Vorrichtung nach einem der Ansprüche 9 oder 10, dadurch gekennzeichnet, daß das genannte Zirkulationsabteil (2) und das Zusatzabteil (4), die Elektrolysezelle (6) und die Aufnahmekammer (1) für Pulver (P) derart miteinander verbunden sind, daß die Lösung aus dem oberen Abschnitt des Zirkulationsabteils (2) in den oberen Abschnitt des genannten Zusatz-Abteils (4) fließt und dann aus dem unteren Abschnitt dieses Zusatz-Abteils (4) in den unteren Abschnitt des Anodenabeils (62) der Elektrolysezelle (6) fließt, die in die Aufnahmekammer (1) für Pulver (P) überläuft, wobei das genannte Zusatzabteil (4) mindestens über einen Teil seiner Höhe mit einem Filter (5) ausgestattet ist.

## Claims

1. A process for dissolving a powder (P) consisting essentially of a mixture of oxides of uranium, plutonium and/or mixed oxides of uranium and plutonium in a nitric acid solution, using divalent silver produced in situ by electrolysis, wherein the process comprises two steps, which are carried out successively in the same apparatus, inside which an attack solution is circulated in a closed loop:
• a first step, during the whole of which said apparatus is continuously supplied with said powder (P) and with nitric acid (A) while a stream of solution (S) is continuously extracted through a filter (5) which forms an integral part of said apparatus, in which solution mainly said uranium oxide is dissolved; the flow rate of said stream being calculated so as to keep a constant uranium concentration in circulation in said apparatus; and
• a second step, after stopping said supply of powder (P) and of acid (A) and said extraction, during which step the plutonium oxide accumulated in said apparatus during the whole of the first step is dissolved, using divalent silver generated in situ by electrolysis; and at the end of said second step, recovering a solution in which said plutonium oxide is dissolved.

2. The process according to claim 1, wherein during said first step, the solution to be filtered sweeps said filter (5) tangentially.

3. The process according to claim 1 or 2, wherein during said first step, the acidity of the circulating solution is kept constant, advantageously at about 6 N.

4. The process according to any one of claims 1 to 3, wherein during said first step, the circulating solution is heated; advantageously to keep its temperature at about 80°C.

5. The process according to any one of claims 1 to 4, wherein at the start of said second step, a sufficient quantity of monovalent silver in the form of silver nitrate is added to said circulating solution.

6. The process according to any one of claims 1 to 5, wherein during said second step, the acidity of the circulating solution is maintained in the range 4 N to 6 N.

7. The process according to any one of claims 1 to 6, wherein during said second step, said circulating solution is cooled, advantageously to keep its temperature at about 25°C.

8. An apparatus for dissolving a powder (P), consisting essentially of a mixture of oxides of uranium, plutonium and/or mixed oxides of uranium and of plutonium, in a nitric acid solution, using divalent silver produced in situ by electrolysis; said apparatus comprising the following interconnected elements:
• a circulation compartment (2) provided with a stirrer (3) to agitate and circulate the solution in the apparatus assembly;
• an additional compartment (4); and
• an electrolysis cell (6) for the production of divalent silver;
said compartments (2, 4) and cell (6) having subcritical geometry;
wherein said apparatus further comprises, advantageously in said additional compartment (4), means (5) for continuously filtering a stream of said circulating solution (S); said means (5) being associated with means for extracting said stream of filtered solution (S).

9. The apparatus according to claim 8, further comprising a chamber (1) for receiving powder (P) connected to said circulation compartment (2) and to said electrolysis cell (6); said chamber (1) for receiving powder having subcritical geometry.

10. The apparatus according to claim 9, wherein the conduit (8) connecting said chamber (1) for receiving powder (P) and said circulation compartment (2) is equipped with a double-walled jacket (9), which can be supplied with heating fluid (F) or cooling fluid (F).

11. The apparatus according to one of claims 9 or 10, wherein said circulation compartment (2) and additional compartment (4), the electrolysis cell (6), and the chamber (1) for receiving powder (P) are all interconnected such that the solution flows from the top of said circulation compartment (2) to the top of said additional compartment (4), then from the bottom of said additional compartment (4) to the bottom of the anode compartment (62) of the electrolysis cell (6) which overflows into the chamber (1) for receiving powder (P); said additional compartment (4) being equipped with a filter (5) extending over at least a portion of its height.
